(19) Europäisches Patentamt
European Patent Office
Office européen des brevets

(11) **EP 1 722 578 B1**

(12) **EUROPÄISCHE PATENTSCHRIFT**

(45) Veröffentlichungstag und Bekanntmachung des Hinweises auf die Patenterteilung:
**19.09.2012 Patentblatt 2012/38**

(51) Int Cl.:
*H04Q 3/00* [(2006.01)]     *H04L 12/24* [(2006.01)]

(21) Anmeldenummer: **06004323.9**

(22) Anmeldetag: **03.03.2006**

(54) **Verfahren und System zur automatischen Generierung einer Datei**

Method and system for the automatic generation of a data file

Procédé et système de génération automatique d'un fichier de données

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **13.05.2005 DE 102005022191**

(43) Veröffentlichungstag der Anmeldung:
**15.11.2006 Patentblatt 2006/46**

(73) Patentinhaber: **Deutsche Telekom AG**
**53113 Bonn (DE)**

(72) Erfinder:
• **Brackmann, Ludwig, Dipl.-Ing.**
**53225 Bonn (DE)**
• **Welke, Sebastian**
**12623 Berlin (DE)**
• **Vogt, Katja**
**13053 Berlin (DE)**
• **Meier van Esch, Peter**
**50698 Köln (DE)**

(74) Vertreter: **Braun-Dullaeus, Karl-Ulrich et al**
**Braun-Dullaeus Pannen**
**Platz der Ideen 2**
**40476 Düsseldorf (DE)**

(56) Entgegenhaltungen:
**US-A1- 2004 122 803     US-B1- 6 460 036**

**Beschreibung**

Die vorliegende Erfindung betrifft ein Verfahren zur automatischen Generierung einer Datei enthaltend eine Vielzahl von Datensätzen, wobei ein Datensatz das Angebot eines Anbieters charakterisiert, wobei die Datei über eine Datenleitung, insbesondere über das Internet, zugänglich ist und wobei ein Angebot über die Datenleitung abrufbar ist. Die Erfindung betrifft zudem ein System zur Umsetzung des Verfahrens.

In einer besonders einfachen Art werden mit derartigen Verfahren über das Internet zugängliche Handelsplattformen realisiert, wie sie in großer Vielzahl und für vielfältige Produkte in Form von Waren und Dienstleistungen bekannt sind. Dabei stehen den Interessenten die von den Anbietern eingestellten Angebote für den direkten Zugriff, beispielsweise zum Kauf, zur Verfügung. Die Anbieter können ihr Angebot meist über eine vorgegebene Eingabemaske in einen konformen Datensatz wandeln, der dann in die Datei aufgenommen wird.

Neben Waren und Dienstleistungen sind auch Plattformen bekannt, über die Kontakte und Informationen über das Internet angeboten werden. Diese speziellen Kontaktmanagement-Plattformen erfreuen sich steigender Beliebtheit und verzeichnen ein überdurchschnittliches Marktwachstum. Über diese Plattformen werden Beziehungsnetzwerke gestrickt und Geschäftskontakte vermittelt. Die Idee liegt darin, dass jeder mit jedem bekannt über ein paar Ecken ist und dass auch diese Art von weitläufiger Bekanntheit ein gewisses Grundvertrauen schafft. Ein Nutzer profitiert von den Kontakten der anderen Nutzer. Dabei werden u.U. auch Beziehungen aufgedeckt, die einem Nutzer bis dahin verborgen blieben.

Die Beziehungspfade zwischen den unterschiedlichen Nutzern werden über netzzentrische Applikationen dargestellt. Dabei gehen solche Applikation davon aus, dass jeder Nutzer eine Kontaktliste entsprechend einem Adressbuch besitzt, in der er die Kontakte zu seinen Freunden und Bekannten hinterlegt. Bei der Vernetzung einer Vielzahl solcher Kontaktlisten entsteht ein Netzwerk, bei dem immer wieder in den Listen auftauchende Namen Knoten bilden, über die sich auch Strukturen schließen. Ein solches Netzwerk gestattet dem Nutzer letztendlich Zugriff auf die Kontaktlisten von Bekannten von Bekannten von Bekannten usw.. So entsteht ein Geflecht von Beziehungspfaden über mehrere Stufen.

Der Nachteil der bekannten Verfahren zur Generierung derartiger Plattformen liegt generell darin, dass das Einstellen von Angeboten und die Pflege der eingestellten Angebote manuell erfolgt. Entsprechend aufwendig ist das Hinzufügen der vielen eigenen Kontakte bei solchen Kontaktmanagement-Plattformen. Zudem ist eine umfangreiche manuelle Profileingabe notwendig, bei der Angaben zu Interessen und beruflichen Schwerpunkten gemacht werden. Dieses Erfordernis erhöht den Pflegeaufwand um ein Weiteres.

Aus dem US 2004/0122803 ist ein Verfahren zu Identifizierung eines Beziehungsgeflechts bekannt. Bewertungskriterien des sozialen Netzwerkes sind Parameter wie die Dauer von Gesprächen oder deren Häufigkeit. Der Nutzer dieses Systems kann somit anhand von Beziehungspfade den kürzesten sozialen Weg zwischen zwei Individuen nachvollziehen.

Das US-B1-6 460 036 zeigt ein Verteilungsverfahren für im Internet dargebotene Zeitungsartikel. Hierzu werden von den Artikeln Profile erstellt, welche mit Vorgaben des Nutzers abgeglichen werden. Bewertungsparameter sind hier beispielsweise die Länge des Textes, der Preis oder dessen Popularität.

Die Aufgabe der vorliegenden Erfindung ist es nunmehr, ein gattungsgemäßes Verfahren zu schaffen, das sich mit einfachen Mitteln kostengünstig umsetzen lässt und jedem Nutzer eine automatische und damit komfortable Eingabe und eine Pflege seiner das Angebot bildenden Daten erlaubt.

Diese Aufgabe wird durch ein Verfahren mit den kennzeichnenden Merkmalen des Anspruch 1 gelöst. Vorteilhafte Ausgestaltungen des Verfahrens sind in den Unteransprüchen genannt.

Der wesentliche Grundgedanke der Erfindung liegt darin, die bekannten Verfahren um eine automatische Auswertung von kommunikativen Verbindungen zwischen zwei Nutzern über das Telekommunikationsnetz zu erweitern. Erfindungsgemäß können die Nutzer ihr eigenes Telekommunikationsverhalten zumindest innerhalb gewisser durch den Datenschutz gesteckter Grenzen registrieren und bewerten lassen, wobei die aus diesen Bewertungen gewonnenen Informationen als Grundlage für die Angebote der einzelnen Nutzer herangezogen werden. Die Erfindung betrifft daher gewissermaßen ein Verfahren, mit dem über die Analyse des Kommunikationsverhaltens und/oder von Kommunikationsinhalten Profile für die Nutzer erstellt und Zusammenhänge im Sinne eines Beziehungsnetzwerks ("network") zwischen Nutzern ermittelt und dargestellt werden können.

Bei der Umsetzung werden zunächst sowohl Anbieter als auch Interessenten ganz generell als "Nutzer" des Verfahrens behandelt und daher zur Gruppe der Nutzer zusammengefasst. Dann geht die Erfindung davon aus, dass die Nutzer über ein beliebiges Kommunikationsnetz, beispielsweise über ein Telekommunikationsnetz wie das Telephonnetz, mindestens paarweise miteinander in Verbindung treten. Das Kommunikationsnetz muss nicht das für den Zugriff auf die Datenbank erforderliche Netz, also insbesondere das Internet, sein. Erfindungsgemäß werden nunmehr die über das Kommunikationsnetz abgewickelte Verbindungen registriert und mit einem Bewertungsprogramm automatisch hinsichtlich des für ein Angebot relevanten Informationsgehaltes bewertet, wobei sich die Bewertung an vorgegebenen Kriterien orientiert.

Auch das Merkmal "Informationsgehalt" wird ganz allgemein verwendet. So ergibt sich beispielsweise allein schon aus der Tatsache, dass eine Verbindung stattgefunden hat, sowie aus der Dauer der Verbindung eine relevante Information betreffend den oder die jeweiligen Nutzer. Weitere Information kann mitunter aus dem Inhalt der Kommunikation abgeleitet werden, wobei dieser beispielsweise auf explizite Bedürfnisse eines Interessenten oder spezielle Angebote des Anbieters hinweist. Bei Erfüllung der vorgegebenen Kriterien wird ein Angebot als Datensatz in die Datei aufgenommen oder innerhalb der Datei modifiziert.

Je nach dem, ob beispielsweise anhand häufig aufgenommener Verbindungen neue Beziehungen zwischen Nutzern entdeckt werden oder ob schon bekannte Beziehungen zwischen Nutzern als inhaltlich überarbeitungswürdig erkannt werden, kann ein neues Angebot bei Erfüllung der Kriterien als Datensatz in die Datei aufgenommen werden oder ein bestehendes Angebot wird innerhalb der Datei modifiziert. Es sei an dieser Stelle darauf hingewiesen, dass der Begriff "Datei" hier ganz allgemein verwendet wird und die Datei auch aus mehreren über entsprechend mehrere Computer verteilen Fragmenten bestehen kann.

Auch wenn sich die Erfindung für jede Art von Handelsplattform einsetzen lässt, so ist es doch besonders vorteilhaft, diese automatische Kommunikationsbewertung im Falle der Kontaktmanagement-Plattformen zu nutzen, wo jeder Interessent auch gleichzeitig Anbieter sein muss oder zumindest sein sollte. Wenn ein Nutzer an einer solchen Plattform partizipieren möchte und seine Kontakte nicht über eine manuelle Eingabe vornehmen möchte, dann autorisiert er beispielsweise den Betreiber der Plattform seine Kontakte über das Telekommunikationsnetz zu registrieren und auszuwerten. Über einen gewissen Zeitraum hinweg tritt der Nutzer nämlich mit den wichtigsten seiner Bekannten und Geschäftspartnern in Kontakt, so dass sich aus der Registrierung der Kontakte letztendlich ein Abbild seines Adressbuches ergibt, wobei sich entsprechend der Zahl der Kontakte und deren Dauer auch ein Ranking der Partner erstellen lässt. Gegebenenfalls werden auch die Inhalte der Kontakte auf relevante Information untersucht, so dass sich ein vollständiges Profil der Gesprächspartner ergibt. Im Rahmen des Verfahrens können beispielsweise Quell- und Zielrufnummer von Verbindungen, sowie zugehörige Teilnehmerdaten und kommunizierte Inhalte zur Erstellung einer Beziehungsdatenbank herangezogen werden. Die Namen der Teilnehmer können beispielsweise über eine Invers-Suche in der Datenbank der Telephonauskunft ermittelt werden.

Der wesentliche Vorteil des erfindungsgemäßen Verfahrens ist, dass die bisherige notwendige manuelle Eingabe von Information durch die Anwender verzichtbar ist. Dabei kann das System seinen Nutzern eine Antwort auf die oft gestellte Frage geben: "Wer kennt jemanden, der jemanden kennt, der mir zum Thema XYZ weiterhelfen kann". Ein weiterer Vorteil ist, dass nunmehr auch Zielgruppen, denen bislang die intellektuellen oder technischen Möglichkeiten fehlten, ebenfalls ein solches Kontaktnetzwerk aufbauen und zu bestimmten Themengebieten zur Kommunikation nutzen können. Das System erfasst automatisch die Kontakte eines Nutzers sowie die Kontakte der kontaktierten Nutzer usw. und kann den Kontakten aufgrund der analysierten Kommunikationsinhalte qualifiziert Themen priorisiert zuordnen und diesen erweiterten Kontakt- und Themenkreis dann den jeweils beteiligten, insbesondere den ausgewerteten und berücksichtigten Nutzern für ihre Kommunikationsbedürfnisse zur Verfügung stellen.

Um eine ausreichende Datensicherheit zu gewährleisten und um das Interesse der Nutzer an einer Beteiligung an dem Verfahren und damit zu einer Offenlegung ihrer persönlichen Kontakte zu ermuntern, ist es vorteilhaft, die Ergebnisse der automatischen Recherchen jeweils nur den Nutzern zur Verfügung zu stellen, die einen begrenzten Bekanntheitsstufen-Abstand zu den anderen registrierten Nutzern haben. Auf jeden Fall kann jedoch davon ausgegangen werden, dass beide an einer Verbindung teilhabenden Partner in einer persönlichen Verbindung stehen und sich zumindest beiläufig kennen. Der Grad der Bekanntheit lässt sich aus den Gewohnheiten, insbesondere aus der Verbindungshäufigkeit, der Anzahl der Verbindungen und auch deren Inhalt abschätzen. Das erfindungsgemäße Verfahren lässt sich folgendermaßen umsetzen:

In einer ersten Phase erfolgt zunächst eine Datenerhebung, die simultan zur eigentlichen Kommunikation über das Netz, insbesondere simultan zum Telephongespräch, vorgenommen wird. Diese Datenerhebung verläuft weitgehend medienübergreifend und im Hintergrund, so dass der Nutzer in seinem Verhalten nicht beeinträchtigt wird.

Um eine direkte Beziehung zwischen zwei Nutzern zu identifizieren, können die beiden Kommunikationsteilnehmer markiert werden, wobei ihnen zunächst ein ungewichteter Kontaktstatus zugeordnet wird. So kann ein grundlegendes Beziehungsgeflecht respektive eine erste Form der Kontaktliste gebildet werden. Diese Erhebung erfolgt dabei über alle Kommunikationsmedien übergreifend. Berücksichtigt werden insbesondere herkömmliche Telefonate, Telefonate auf SIP-Basis, E-Mail, Videomail, Festnetz-SMS und -MMS, sowie Instant Messaging oder "Push-to-Talk".

Für die spätere Bewertung (Klassifizierung) ist die Erhebung von Daten über die durchschnittliche Dauer der festgestellten Kontakte vorteilhaft. So kann die Dauer eines Gespräches eingeteilt werden in eine der Kategorien "Kurztelefonat" (bis 1 min), "Standardtelefonat" (1-10 min) oder "Langzeittelefonat "(ab 10 min). Ein anderer für die Bewertung wichtiger Parameter ist die Intensität eines Kontaktes, die mit steigender Regelmäßigkeit zunimmt. Der Indikator "Regelmäßigkeit" ist daher für die Bewertung der Kontakte ebenfalls vorteilhaft. Zur Vereinfachung könnten folgende Kategorien vorgesehen sein: "sehr hoch" (ein Kontakt pro Tag), "hoch" (ein Kontakt pro Woche), "mittel" (ein Kontakt pro Monat) oder "niedrig" (weniger als ein Kontakt pro Monat). Dabei ist das Medium und die Richtung der Kommunikation vorteilhafterweise nicht zu berücksichtigen. Die Kontaktaufnahme von A zu B via Telefon ist gleichwertig zu der Kontaktaufnahme von B zu A via Email.

Als weiterer für die Bewertung erheblicher Parameter kann der Inhalt dienen, um das Profil eines Nutzers abzurunden. Beispielsweise kann das Profil eines Nutzers um seine speziellen Interessen erweitert werden. Erfolgt die Kommunikation via Sprache, insbesondere in Form von Telefonaten oder Voice Chat, so wird der Sprachkanal durch eine Spracherkennungssoftware geleitet. Diese erkennt bestimmte Schlüsselworte in einem Gespräch, wobei diese Schlüsselworte dem Profil zugeordnet werden, wenn sie in den Gesprächen häufig verwendet werden. Im Falle der schriftlichen Kommunikation, beispielsweise per Email oder SMS, werden die versendeten Texte nach Schlüsselworten durchsucht. Dabei besteht die Möglichkeit, lediglich die Betreffzeilen von Emails zu untersuchen oder, um ein detailreicheres Informationsspektrum zu erhalten, die gesamte Nachricht zu analysieren. Es ist zudem möglich, persönliche Parameter, wie Emotionen, zu identifizieren und in die Datei aufzunehmen. Eine solche Untersuchung ist beispielsweise anhand der Stimmlage während eines Gespräches oder anhand besonderer Reizwörter möglich.

In einer nachfolgenden Phase des erfindungsgemäßen Verfahrens werden die gewonnenen Daten ausgewertet und die identifizierten Kontakte gewichtet. Dabei wird die Intensität der Beziehung zwischen zwei Nutzern bewertet. Die Grundlage für die Berechnung bilden die o.g. Kategorien "Gesprächsdauer", "Häufigkeit" und "Regelmäßigkeit". Da die Regelmäßigkeit für die Bewertung der Intensität von größerer Bedeutung ist, wird sie mit einem erhöhten Faktor in der Berechnung berücksichtigt. In der Beispielsbeschreibung ist der Prozess der Priorisierung von Teilnehmer B als Kontakt von Teilnehmer A näher erläutert.

Allerdings ist für die Teilnahme eines Nutzers dessen Einwilligung in die Analyse von privaten Inhalten und die Weitergabe bestimmter Informationen an Dritte eine Voraussetzung zur Nutzung des Verfahrens. Letztendlich führt das Ergebnis der Bewertung zu einem Eintrag in der Datei. Die festgestellten Beziehungspfade können auf dem Display des Telephons oder des videofähigen Endgerätes dargestellt oder per Sprache ausgegeben werden. Die Zwischenkontakte können durch Namen und/oder durch Fotos dargestellt werden. Durch Auswahl einer dieser Kontakte wird eine Einsicht in das entsprechende Profil ermöglicht. Der Nutzer hat auch Einblick in sein automatisch erstelltes Profil und kann gegebenenfalls Änderungen vornehmen. In dem Datensatz sind die identifizierten Interessen hinterlegt und die Liste möglicher Interessensgemeinschaften (Communities) aufgeführt. Durch Anwählen einer bestimmten Community gelangt der Nutzer direkt in das entsprechende Forum, um dort Beiträge zu abzusenden oder via "Instant Messaging" mit anderen Mitgliedern zu kommunizieren.

Das erfindungsgemäße Verfahren kann mit einem System umgesetzt werden, das ein erstes Kommunikationsnetz, insbesondere ein Telekommunikationsnetz wie das Telephonnetz, aufweist, mit dem Nutzer miteinander in Verbindung treten. Zudem ist an das erste Kommunikationsnetz ein Computer angeschlossen, der eine Datei verwaltet. Auf dem Computer ist ein Bewertungsprogramm realisiert, das die Kommunikation der Nutzer über das erstes Kommunikationsnetz insofern "überwacht", als es Verbindungen zwischen den Nutzern registriert und anhand vorgegebener Kriterien hinsichtlich eines für ein interessantes Angebot relevanten Informationsgehaltes bewertet. Falls eine bestimmte Verbindung ein- oder mehrmals stattgefunden hat, oder falls der Inhalt einer Verbindung bezüglich eines Angebotes besonders interessant erscheint, wenn also die Verbindung bestimmte Kriterien erfüllt, wird ein neues Angebot als Datensatz in die Datei aufgenommen oder einen zu dem Angebot bestehenden Datensatz innerhalb der Datei modifiziert. Der Computer und damit die Angebotsdatei ist den Nutzern über das erste und/oder ein zweites Kommunikationsnetz, insbesondere das Internet, zugänglich, so dass die Nutzer die Angebote abrufen können

Nachfolgend wird die Erfindung anhand eines speziellen Ausführungsbeispieles und zweier Figuren näher erklärt:

Mit dem ersten Telefonat oder der erste Email wird zwischen A und B ein Kontakt identifiziert, für den je nach der Kontaktdauer Gewichtungspunkte festgelegt werden, wobei Gewichtungspunkte den Einfluss auf die Kontaktintensität beschreiben. Je mehr Gewichtungspunkte einer Kategorie (bspw. "Kurztelefonat", "Standardtelefonat") zugeordnet werden, desto fördernder ist diese für einen intensiven Kontakt. Folgende Angaben können als Bewertungsgrundlage dienen:

Das Kurztelephonat wird mit 1 Punkt bewertet, das Standardtelefonat erhält 2 Punkte und das Langzeittelefonat ist 3 Punkte wert. Bei einer mit "sehr hoch" zu bewertenden Häufigkeit und Regelmäßigkeit werden 8 Punkte vergeben, bei "hoher" 4 Punkte, bei "mittlerer" 2 Punkte und bei "niedriger" 1 Punkt. Aus dem Produkt der Gesprächsdauer (GD) und der Regelmäßigkeit (R) errechnet sich der Prioritätsindikator (PI) nach

$$PI = GD * R$$

Wenn nun A durchschnittlich einmal pro Woche ein Gespräch von nicht mehr als 10 Minuten mit B führt berechnet sich der Prioritätsindikator folglich aus dem Gewichtungswert für die Gesprächsdauer, in diesem Fall "2" (Standardtelefonat), und einem Wert von "4" für die Regelmäßigkeit ("hoch"), so dass sich für PI = 2 * 4 = 8 ergibt.

Mit Hilfe des Prioritätsindikators wird nun eine Reihenfolge ("Ranking") der identifizierten Kontakte entsprechend der Intensität der Beziehung erstellt. So wird garantiert, dass lediglich die Beziehungspfade mit höchster Beziehungsintensität dem Kunden angezeigt werden. Es wird damit auch ausgeschlossen, dass veraltete Kontakte als Zwischenglied in einer Beziehungskette erscheinen. Aktualität und eine hohe Qualität des Services sind die logische Folge.

Nach der beschriebenen Analyse des Inhaltes der Gespräche können Gruppen (Communities) gebildet werden, wobei einer Community beispielsweise ein bestimmtes Schlüsselwort zugeordnet wird. Diese Interessensgemeinschaften werden automatisch zusammengefasst und bieten die Möglichkeit in einem themenspezifischen Forum miteinander in Kontakt zu treten. Ferner haben Anwender die Möglichkeit auch aktiv nach Schlüsselwörtern oder Communities zu suchen, um dort Experten zu einem Thema zu finden.

Zudem ist eine aktive Informationseingabe möglich. Dabei können die Nutzer neben den automatisch generierten Informationen ihr Profil auch manuell erweitern. Dieses Merkmal ist beispielsweise geeignet, um Angaben wie "Visitenkarte" (Foto, etc.), "Interessen" (Hobbys, etc) und "Persönliches Telefonbuch" (eigenständig festgelegte Kontakte) zu machen. Diese manuell eingegebenen Daten werden als fixiert betrachtet und gelten dauerhaft als Kontakte oberster Priorität.

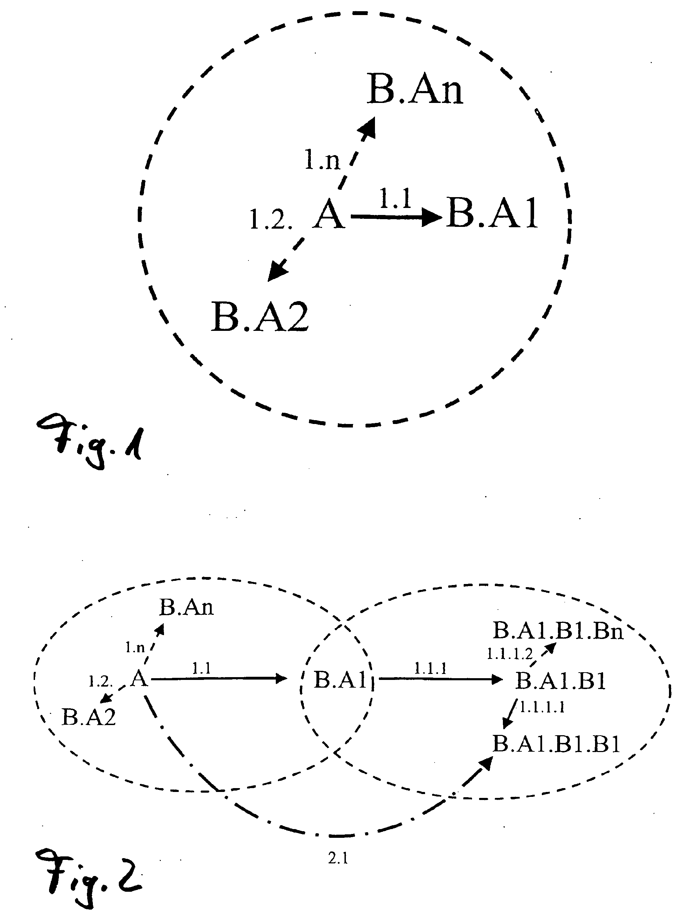

In Figur 1 ist ein Kontaktnetzwerk des Teilnehmers A dargestellt. A pflegt die Kommunikationsverbindungen 1.1 bis 1.n zu den Teilnehmern B.A2 bis B.An. Zwischen dem Teilnehmer A und den Teilnehmern B.A2 bis B.An besteht darüber hinaus ein Beziehungsnetzwerk ("man kennt sich"). A ist in der Lage, mit einem oder mehreren Teilnehmern B nacheinander oder gleichzeitig in Verbindung zu treten. Jeder Teilnehmer B kann seinerseits an die logische Stelle von A treten.

Figur 2 stellt eine Kombination der jeweils einzelnen Kontaktnetzwerke nach Figur 1 der Teilnehmer A, B.A1 bis B.A.1.B.1 dar. Dabei ist die Position aller Teilnehmer gleichberechtigt austauschbar. Jeder Teilnehmer verfügt seinerseits jeweils parallel zum Kontaktnetzwerk über ein Beziehungsnetzwerk. Erfindungsgemäß wird aus dem Kontaktnetzwerk der einzelnen Teilnehmer auf deren Beziehungsnetzwerk geschlossen, wobei, wie beschrieben, auch Inhalte der jeweiligen Kommunikation berücksichtigt werden können.

Zusätzlich wird einem Teilnehmer A die Möglichkeit gegeben, mit einem Suchbegriff in Beziehungsnetzwerken benachbarter Teilnehmer zu suchen. Die Entfernung zu den hierbei berücksichtigten benachbarten Teilnehmern ist wählbar und vergleichbar mit einem Generationenabstand in einem Stammbaum. In dem aufgeführten Beispiel hat A einen Suchbegriff im Beziehungsnetzwerk von B.A1.B1 nämlich bei B.A1.B1.B1 gefunden. Mit dem Kommunikationsnetzwerk von B.A1.B1 wird A nun die direkte Kommunikationsverbindung 2.1 zu B.A1.B1.B1 aufgezeigt.

**Patentansprüche**

1. Verfahren zur automatischen Generierung einer Datei enthaltend eine Vielzahl von Datensätzen, wobei ein Datensatz das Angebot eines Anbieters charakterisiert, wobei die Datei über eine Datenleitung, insbesondere über das Internet, für Interessenten zugänglich ist und wobei ein ausgewähltes Angebot über die Datenleitung abrufbar ist,
   **dadurch gekennzeichnet,**
   **dass** Anbieter und Interessenten eine Gruppe von Nutzern bilden, die jeweils miteinander über ein Kommunikationsnetz, insbesondere ein Telekommunikationsnetz, wie das Telephonnetz, in Verbindung treten, wobei Verbindungen und Kommunikationsinhalte zwischen Nutzern registriert und mit einem Bewertungsprogramm automatisch anhand vorgegebener Kriterien hinsichtlich des für ein Angebot relevanten Informationsgehaltes bewertet werden und wobei ein Angebot bei Erfüllung der Kriterien als Datensatz in die Datei aufgenommen oder wobei ein Angebot innerhalb der Datei modifiziert wird.

2. Verfahren nach Anspruch 1,
   **dadurch gekennzeichnet,**
   **dass** die automatische Kommunikationsbewertung zum Aufbau und zur Pflege einer Kontaktmanagement-Plattformen genutzt wird, wobei ein Beziehungsnetzwerk aufgebaut und den Nutzern zur Verfügung gestellt wird.

3. Verfahren nach Anspruch 2,
   **dadurch gekennzeichnet,**
   **dass** in einem ersten Schritt von den Nutzern die Zustirmmung zur Teilnahme an der automatischen Registrierung eingeholt wird, wobei den Nutzern insbesondere die Gelegenheit gegeben wird, einzelne Verbindungen als abhörsicher zu registrieren.

4. Verfahren nach einem der vorherigen Ansprüche,
   **dadurch gekennzeichnet, dass** aus der Tatsache, dass eine Verbindung zwischen Nutzern stattgefunden hat, und aus der Dauer der Verbindung eine relevante Information betreffend den oder die jeweiligen Nutzer gewonnen wird, die in das entsprechende Angebot aufgenommen wird.

5. Verfahren nach einem der vorherigen Ansprüche,
   **dadurch gekennzeichnet, dass** die Ergebnisseder der automatischen Bewertungen jeweils nur den Nutzern zur Verfügung gestellt werden, die einen begrenzten Bekanntheitsstufen-Abstand zu den anderen registrierten Nutzern haben.

6. Verfahren nach einem der vorherigen Ansprüche, **dadurch gekennzeichnet, dass** in Fällen, in denen die Kommunikation über Sprache erfolgt, der Sprachkanal durch eine Spracherkennungssoftware geleitet wird, wobei diese bestimmte Schlüsselworte in einem Gespräch erkennt und wobei diese Schlüsselworte dem Angebot eines Nutzers als Profil zugeordnet werden, wenn sie in den Gesprächen häufig verwendet werden.

7. Verfahren nach einem der vorherigen Ansprüche, **dadurch gekennzeichnet, dass** die gewonnenen Daten ausgewertet und die identifizierten Kontakte gewichtet werden, wobei die Intensität der Beziehung zwischen zwei Nutzern bewertet wird.

8. Verfahren nach einem der vorherigen Ansprüche, **dadurch gekennzeichnet**, dass die festgestellten Beziehungspfade auf dem Display des Telephons oder des videofähigen Endgerätes dargestellt werden, wobei insbesondere Zwischenkontakte durch Namen und/oder durch Fotos dargestellt werden.

9. Verfahren nach einem der vorherigen Ansprüche, **dadurch gekennzeichnet, dass** die Bewertung simultan zur herkömmlichen über das Netz geführten Kommunikation, insbesondere simultan zum Telephongespräch, vorgenommen wird.

10. Verfahren nach Anspruch 9, **dadurch gekennzeichnet, dass** die Bewertung medienübergreifend und im Hintergrund geschieht.

11. System zur Umsetzung des Verfahrens nach einem der Ansprüch 1 bis 10 aufweisend ein erstes Kommunikationsnetz mit dem Nutzer miteinander in Verbindung treten, aufweisend eine an das erste Kommunikationsnetz angeschlossene Computereinheit, wobei den Nutzern über das erste und/oder ein zweites Kommunikationsnetz eine von der Computereinheit verwaltete Datei zugänglich ist, die von Nutzern abrufbare Angebote enthält, **gekennzeichnet durch** ein auf der Computereinheit realisiertes Bewertungsprogramm, das Verbindungen zwischen den Nutzern registriert und anhand vorgegebener Kriterien hinsichtlich des für ein Angebot relevanten Informationsgehaltes bewertet, wobei das Bewertungsprogramm bei Erfüllung der Kriterien ein Angebot als neuen Datensatz in die Datei aufnimmt oder einen zu dem Angebot bestehenden Datensatz innerhalb der Datei modifiziert.

**Claims**

1. A method for the automatic generation of a file containing a plurality of data records, wherein a data record characterizes the offer of a supplier, wherein the file is accessible to interested parties via a data link, particularly via the Internet, and wherein a selected offer can also be called up via the data link **characterized in that** suppliers and interested parties form a group of users who contact with one another via a communications network, particularly a telecommunications network, such as the telephone network, wherein connections and communications contents between users are registered and automatically evaluated using an evaluation program based on predetermined criteria in relation to the information content relevant to an offer and wherein an offer is included as a data record in the file when the criteria are met or wherein an offer is modified within the file.

2. The method according to claim 1, **characterized in that** the automatic communication evaluation is used to construct and service a contact management platform, wherein a relationship network is built up and made available to users.

3. The method according to Claim 2, **characterized in that** in a first step the users' consent to participating in the automatic registration is sought, wherein the users are particularly given the opportunity of registering individual connections as secure.

4. The method according to one of the preceding claims, **characterized in that** relevant information concerning the respective user or users, which is included in the corresponding offer, is acquired due to the fact that contact has been made between users and from the duration of the contact.

5. The method according to one of the preceding claims, **characterized in that** in each case the results of the automatic evaluations are only made available to users who have a limited profile level gap in relation to the other registered users.

6. The method according to one of the preceding claims, **characterized in that** in cases in which communication is by speech, the speech channel is controlled by speech recognition software, wherein said software recognizes certain key words in a conversation and wherein these key words are assigned to a user's offer as their profile, if the words are frequently used in conversations.

7. The method according to one of the preceding claims,
   **characterized in that**
   the data acquired is evaluated and identified contacts are weighted, wherein the intensity of the relationship between two users is evaluated.

8. The method according to one of the preceding claims,
   **characterized in that**
   the relationship paths established are shown on the display of the telephone or video-compatible terminal equipment, wherein intermediate contacts in particular are shown by name and/or by photos.

9. The method according to one of the preceding claims,
   **characterized in that**
   the evaluation is performed simultaneously with the traditional communication conducted across the network, particularly simultaneously with the telephone conversation.

10. The method according to claim 9,
    **characterized in that**
    the evaluation takes place across media in the background.

11. A system for implementing the method according to one of the claims 1 to 10 exhibiting a first communications network with which users contact one another, exhibiting a computer unit connected to the first communications network, wherein a file managed by the computer unit is accessible to users via the first and/or a second communications network, said file containing offers that can be called up by users,
    **characterized in that**
    an evaluation program executed on the computer unit which registers contact between users and evaluates it by means of the defined criteria in relation to the information content relevant to an offer, wherein the evaluation program includes an offer in the file as a new data record if the criteria are met or modifies an data record existing for the offer within the file.

## Revendications

1. Procédé de génération automatique d'un fichier contenant une pluralité de jeux de données, dans lequel un jeu de données caractérise l'offre d'un opérateur, dans lequel le fichier est accessible aux intéressés par l'intermédiaire d'une ligne de données, notamment via l'Internet, et dans lequel une offre sélectionnée pet être appelée par l'intermédiaire de la ligne de données,
   **caractérisée en ce que**
   l'opérateur et les intéressés forment un groupe d'utilisateurs, qui sont respectivement en liaison par l'intermédiaire d'un réseau de communication, notamment un réseau de télécommunication, comme le réseau téléphonique, dans lequel les liaisons et les contenus de communication entre les utilisateurs sont enregistrés et évalués automatiquement avec un programme d'évaluation sur la base de critères prédéterminés en ce qui concerne le contenu information mation significatif pour une offre et dans lequel une offre quand elle satisfait aux critères est acceptée dans le fichier en tant que jeu de données ou dans lequel une offre est modifiée à l'intérieur du fichier.

2. Procédé selon la revendication 1,
   **caractérisé en ce que**
   l'évaluation de communication automatique est utilisée pour construire et entretenir une plateforme de gestion de contacts, dans lequel un réseau de relations est construit et mis à la disposition des utilisateurs.

3. Procédé selon la revendication 2,
   **caractérisé en ce que**
   dans une première étape, l'approbation pour participer à l'enregistrement automatique est obtenue par les utilisateurs, dans lequel la possibilité est notamment offerte aux utilisateurs d'enregistrer des liaisons individuelles comme étant cryptées contre les écoutes.

4. Procédé selon une des revendications précédentes,
   **caractérisé en ce que**
   une information significative concernant le ou les utilisateurs respectifs est acquise d'après le fait qu'une liaison entre les utilisateurs a eu lieu et d'après la durée de la liaison, laquelle information est contenue dans l'offre correspondante.

5. Procédé selon une des revendications précédentes,
   **caractérisé en ce que**
   les résultats des évaluations automatiques sont respectivement mis à la disposition des seuls utilisateurs, qui ont un écart de degré de notoriété limité par rapport aux autres utilisateurs enregistrés.

6. Procédé selon une des revendications précédentes,
   **caractérisé en ce que**
   dans les cas où la communication se fait par la voix, le canal vocal est guidé par un logiciel de reconnaissance vocale, dans lequel ces mots clés déterminés sont reconnus dans une conservation et dans lequel ces mots clés sont affectés comme profil à l'offre d'un utilisateur, quand ils sont fréquemment utilisés dans les conversations.

**7.** Procédé selon une des revendications précédentes, **caractérisé en ce que** les données acquises sont évaluées et les contacts identifiés sont pondérés, dans lequel l'intensité de la relation entre deux utilisateurs est évaluée.

**8.** Procédé selon une des revendications précédentes, **caractérisé en ce que** les chemins de relation détectés sont représentés sur l'écran du téléphone ou du terminal gérant la vidéo, dans lequel notamment les contacts intermédiaires sont représentés par des noms et/ou photos.

**9.** Procédé selon une des revendications précédentes, **caractérisé en ce que** l'évaluation est effectuée simultanément à la communication traditionnellement passée via le réseau, notamment simultanément à la conversation téléphonique.

**10.** Procédé selon la revendication 9, **caractérisé en ce que** l'évaluation se fait sur des supports média multiples et en arrière-plan.

**11.** Système de transposition du procédé selon une des revendications 1 à 10 présentant un premier réseau de communication avec lequel des utilisateurs entrent en liaison, présentant une unité informatique connectée au premier réseau de communication, dans lequel un fichier administré par l'unité informatique, qui contient les offres pouvant être appelées par les utilisateurs, est accessible aux utilisateurs par l'intermédiaire du premier et/ou d'un deuxième réseau de communication, **caractérisé en ce que** un programme d'évaluation réalisé sur l'unité informatique, qui enregistre des liaisons entre les utilisateurs et évalue sur la base des critères prédéterminés en ce qui concerne le contenu informatif significatif pour une offre, dans lequel le programme d'évaluation quand les critères sont remplis adopte une offre comme nouveau jeu de données dans le fichier ou modifie un jeu de données constitutif de l'offre à l'intérieur du fichier.

B.An

1.n

1.2. A $\xrightarrow{1.1}$ B.A1

B.A2

*Fig. 1*

B.An

1.n

1.2. A $\xrightarrow{1.1}$ B.A1 $\xrightarrow{1.1.1}$ B.A1.B1.Bn

1.1.1.2 B.A1.B1

B.A2

1.1.1.1 B.A1.B1.B1

2.1

*Fig. 2*

**IN DER BESCHREIBUNG AUFGEFÜHRTE DOKUMENTE**

**In der Beschreibung aufgeführte Patentdokumente**

- US 20040122803 A
- US 6460036 B1